# EUROPÄISCHE PATENTSCHRIFT

(11) **EP 1 674 336 B1**
(45) Veröffentlichungstag und Bekanntmachung des Hinweises auf die Patenterteilung: **23.07.2008**
(21) Anmeldenummer: 05026676.6
(22) Anmeldetag: 07.12.2005
(51) Int. Cl.: B60P 7/08, B60R 21/06

(54) **Netz zur Ladegutsicherung in Kraftfahrzeugen**
Net for securing load in a vehicle
Filet de sûreté de charge pour un véhicule

(30) Priorität: 21.12.2004 DE 102004061398
(43) Veröffentlichungstag der Anmeldung: 28.06.2006
(73) Patentinhaber: Bayerische Motorenwerke Aktiengesellschaft, 80809 München (DE)
(72) Erfinder: Zach, Silvia, 85855 Ingolstadt (DE)

(56) Entgegenhaltungen:
- DE-C1- 19 513 215
- DE-U1- 29 921 657
- US-B1- 6 302 463

## Beschreibung

Die Erfindung betrifft ein Netz zur Ladegutsicherung in Kraftfahrzeugen mit einer im wesentlichen rechteckigen Grundform, an deren Peripherie Befestigungselemente zur Befestigung des Netzes in dem Kraftfahrzeug vorgesehen sind, wobei das Netz mittels eines Abnähers in zwei Teile unterteilt ist.

In Kraftfahrzeugen finden zur Ladegutsicherung oftmals Netze Verwendung. Diese Netze sind zwar leicht und einfach zu handhaben, sie können aber aufgrund ihrer im wesentlichen an den Rändern angebrachten Befestigungselemente, wie Haken, Ösen o. dgl. nur in einer einzigen Position an der Fahrzeugkarosserie oder der Rückenlehne eines Fahrzeugsitzes befestigt werden. Wird eine andere Befestigungsposition gewählt, hängt das Netz durch und bildet Falten. Als Alternative sind zwar Rollosysteme bekannt, bei denen das Rollo in jeder Position straff gespannt ist, solche Rollosysteme sind aber aufwendig, teuer, schwer, im ausgebauten Zustand schlecht zu handhaben und erfordern meist hohe Bedienkräfte, insbes. wenn sie nach oben eingehängt werden sollen.

Aus der US 6,302,463 B1 ist bereits ein gattungsbildendes Netz zur Ladegutsicherung in Kraftfahrzeugen bekannt. Das Netz hat eine rechteckförmige Grundform, an deren Peripherie Befestigungselemente zur Befestigung des Netzes im Kraftfahrzeug vorgesehen sind. Das Netz weist einen Abnäher auf, durch den das Netz in zwei Teile unterteilt ist.

Es ist daher Aufgabe der vorliegenden Erfindung, ein Netz zur Ladegutsicherung in Kraftfahrzeugen zu schaffen, das leicht und einfach zu handhaben ist, das für unterschiedliche Einhängepositionen verwendbar ist und in all diesen Einhängepositionen straff gespannt ist.

Erfindungsgemäß wird diese Aufgabe gelöst durch ein Netz zur Ladegutsicherung in Kraftfahrzeugen mit einer im wesentlichen rechteckigen Grundform, an deren Peripherie Befestigungselemente zur Befestigung des Netzes in dem Kraftfahrzeug vorgesehen sind, bei dem das Netz mittels eines Abnähers in zwei Teile unterteilt ist. Vorteilhafterweise sind in dem Abnäher Schlaufen vorgesehen. Mit deren Hilfe lässt sich das erfindungsgemäße Netz besonders einfach befestigen.

Ein derart ausgebildetes Netz ermöglicht unterschiedliche Einhängepositionen, ohne die Handhabungsvorteile eines bekannten Netzes zu verlieren. Es ist leicht, faltbar, platzsparend unterbringbar und verursacht auch nur geringe Kosten. Darüber hinaus kommt es gänzlich ohne zusätzliche sperrige Befestigungselemente aus.

Die Unteransprüche beinhalten vorteilhafte Weiterbildungen und Ausgestaltungen des Gegenstandes des Anspruchs 1.

Der Abnäher verläuft nach einer vorteilhaften Ausgestaltung parallel zu einer Längsseite des Netzes. Ein solcher Abnäher ist besonders einfach herstellbar und fällt auch in optischer Hinsicht nicht störend ins Auge.

Besonders einfach gestaltet sich der Abnäher, wenn er gemäß einer vorteilhaften Weiterbildung als eingenähtes Gurtband ausgebildet ist.

Nach einer bevorzugten Weiterbildung unterteilt der Abnäher das Netz im wesentlichen in zwei gleiche Teile. Durch diese Maßnahme wird das Netz in der Mitte unterteilt, so dass sich der Nutzer beim Anbringen nicht darum kümmern zu braucht, wo oben und unten ist.

Die Schlaufen verlaufen vorzugsweise in Längsrichtung des Abnähers und sind als Längsschlitze ausgebildet. Hierdurch wird in besonders einfacher Weise eine Befestigung des Netzes im Fahrzeug ermöglicht.

Zumindest an einem der Längsränder des erfindungsgemäßen Netzes sind Befestigungselemente vorgesehen, mit denen das Netz im Fahrzeug befestigt werden kann. Diese Befestigungselemente sind gemäß einer bevorzugten Ausgestaltung durch die Schlaufen steckbar, wodurch eine gewisse Flexibilität der Befestigungspunkte ermöglicht wird.

Vorteilhafterweise entspricht die Anzahl der Schlaufen der Anzahl der an einem der Längsränder angeordneten Befestigungselemente, so dass jeder Schlaufe ein Befestigungselement zugeordnet ist. Hierdurch wird ein straff gespanntes Netz im aufgespannten Zustand gewährleistet.

Besonders vorteilhaft ist diese Ausgestaltung, wenn weiterhin entsprechend einer bevorzugten Weiterbildung das Netz mittels der durch die Schlaufen gesteckten Befestigungselemente an dem Fahrzeug, insbes. an der Rückenlehne eines Fahrzeugsitzes, befestigbar ist. So wird eine Befestigung des Netzes in unterschiedlichen Neigungsstellungen der Rückenlehne des Fahrzeugsitzes ermöglicht, ohne dass zusätzliche Befestigungselemente angebracht werden müssen.

Wenn die Befestigungselemente durch die Schlaufen gesteckt sind, bildet das Netz nach einer bevorzugten Ausgestaltung in einem Bereich zwischen dem Abnäher und dem die Befestigungselemente tragenden Längsrand eine taschenförmige Aufnahme. In diese taschenförmige Aufnahme kann z. B. ein länglicher Gegenstand, wie ein Schirm, platzsparend und gleichzeitig doch leicht greifbar, untergebracht werden.

Die Befestigungselemente sind vorzugsweise als Haken, Ösen o. dgl. ausgebildet. Dies gewährleistet eine einfache und trotzdem sichere Befestigung des Netzes im Fahrzeug.

Weitere Einzelheiten, Merkmale und Vorteile der Erfindung ergeben sich aus der nachfolgenden beispielhaften Beschreibung anhand der Zeichnungen. Es zeigen:
- Figur 1: eine Frontalansicht des erfindungsgemäßen Netzes,
- Figur 2: eine weitere Frontalansicht des erfindungsgemäßen Netzes,
- Figur 3: das erfindungsgemäße Netz in verschiedenen Anbringungspositionen, und

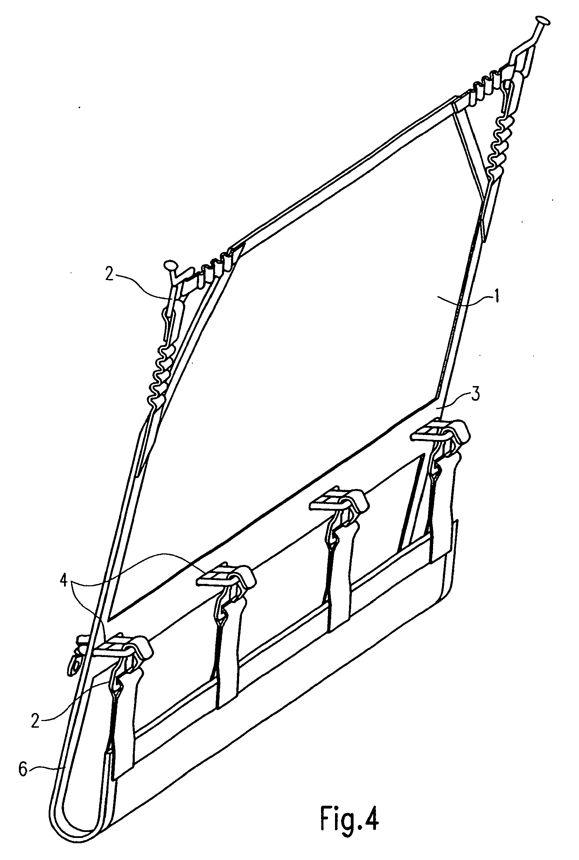

- Figur 4: eine Detailansicht des erfindungsgemäßen Netzes in einer der Anbringungspositionen nach Figur 3.

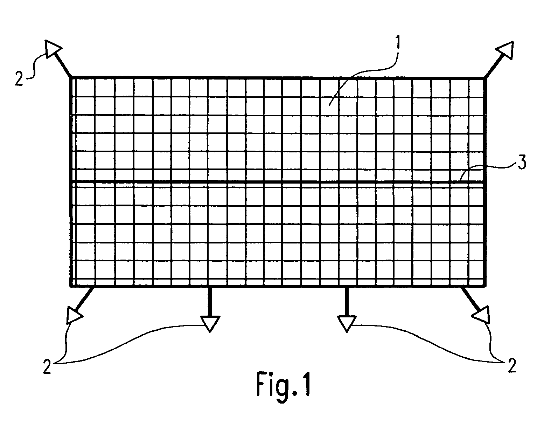

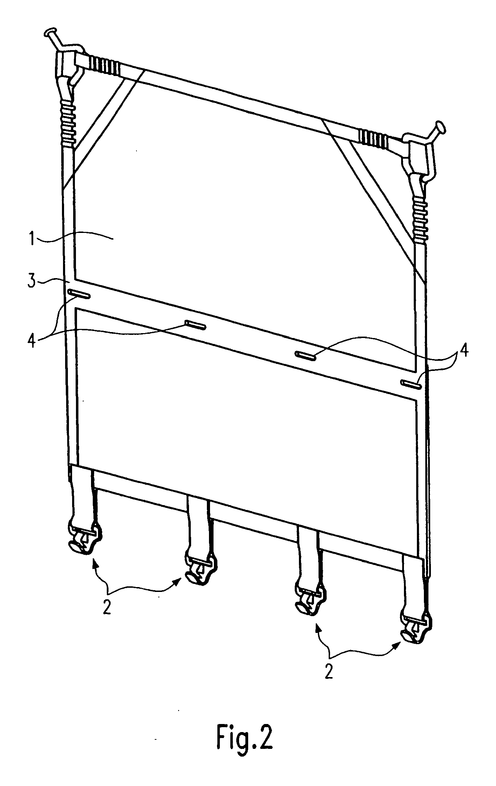

In Figur 1 ist eine Frontalansicht eines erfindungsgemäßen Netzes 1 dargestellt. Das Netz 1 hat eine im wesentlichen rechteckige Grundform. Es kann bei Bedarf aber auch bereichsweise eine leicht konisch nach oben zulaufende Form aufweisen (vgl. Figur 2). An dem Netz 1 sind Befestigungselemente 2 in Form von Schlaufen, Ösen, Haken o. dgl. angebracht. Man erkennt in Figur 1, dass an den beiden oberen Ecken jeweils ein Befestigungselement 2 vorgesehen ist, welches an entsprechenden Aufnahmeelemente im Fahrzeug angebracht werden kann. An der Unterkante des Netzes 1 sind über die Länge verteilt ebenfalls Befestigungselemente 2 angebracht. In Figur 1 sind beispielsweise 4 Befestigungselemente 2 dargestellt. Weiterhin ist das Netz 2 mit einem Abnäher 3 versehen, der im wesentlichen parallel zu den beiden Längsrändern des Netzes 1 verläuft und das Netz 1 in etwa zwei gleiche Teile unterteilt.

In Figur 2 ist eine weitere Frontalansicht des erfindungsgemäßen Netzes 1 dargestellt, bei welcher die Ausbildung des Netzes 1 im Bereich des Abnähers 3 näher zu erkennen ist. Der Abnäher 3 besteht aus einem eingenähten Gurtband, an dem eine Anzahl von Schlaufen 4 vorgesehen sind, welche sich in Richtung des Abnähers 3 erstreckende Langlöcher bilden. Die Anzahl der Schlaufen 4 entspricht der Anzahl der an der Unterkante des Netzes 1 angebrachten Befestigungselemente 2; im dargestellten Ausführungsbeispiel sind 4 Befestigungselemente 2 und folglich auch 4 Schlaufen 4 an dem Gurtband vorgesehen. Bei Bedarf können jedoch auch mehr oder weniger Befestigungselemente 2 bzw. Schlaufen 4 vorgesehen sein.

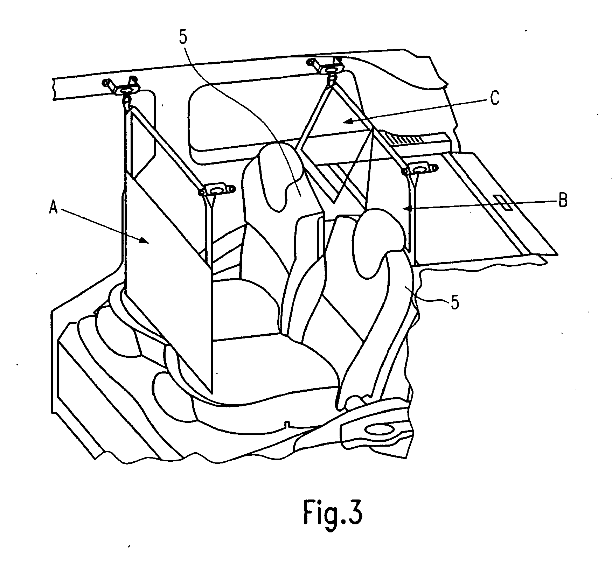

In Figur 3 sind gleichzeitig mehrere Befestigungspositionen des erfindungsgemäßen Netzes 1 dargestellt.

Gemäß Position "A" ist das Netz 1 mit den in den oberen Ecken und an der Unterkante angeordneten Befestigungselementen 2 an dem Fahrzeug angebracht und verspannt. In dieser Position kommt der Abnäher 3 nicht zum Einsatz.

Gemäß Position "B" ist der untere Bereich des Netzes 1 hochgeschlagen. Die an der Unterkante des Netzes 1 angebrachten Befestigungselemente 2 sind durch die Schlaufen 4 gesteckt und können jetzt z. B. an der Rückenlehne 5 eines Fahrzeugsitzes befestigt werden. In diesem Zustand ist das Netz 1 straff gespannt und verläuft - wie in Position "A" - im wesentlichen in senkrechter Richtung.

Gemäß Position "C" sind die an der Unterkante des Netzes 1 angebrachten Befestigungselemente 2 ebenfalls durch die Schlaufen 4 gesteckt und an der Rückenlehne 5 des Fahrzeugsitzes befestigt. In dieser Position ist die Rückenlehne 5 jedoch vertikal oder gar schräg nach vorne gestellt, um ggf. das Ladevolumen zu vergrößern. Auch in dieser Position ist das Netz 1 infolge der durch die Schlaufen 4 gesteckten Befestigungselemente 2 straff gespannt.

In den Positionen "B" und "C", in denen der untere Bereich des Netzes 1 hochgeschlagen ist, bildet der hochgeschlagene Teil eine taschenförmige Aufnahme 6, in welcher z. B. ein Regenschirm oder ein anderer länglicher Gegenstand bequem aufbewahrt werden kann.

Infolge der erfindungsgemäßen Ausgestaltung kann somit das Netz 1 in verschiedenen Positionen straff gespannt gehalten werden, ohne die Vorteile eines solchen Netzes 1 zu verlieren.

Die vorhergehende Beschreibung der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung wie durch den Schutzumfang der Ansprüche definiert, zu verlassen.

### Bezugszeichenliste

- 1: Netz
- 2: Befestigungselement
- 3: Abnäher
- 4: Schlaufe
- 5: Rückenlehne
- 6: Aufnahme

## Patentansprüche

1. Netz zur Ladegutsicherung in Kraftfahrzeugen mit einer im wesentlichen rechteckigen Grundform, an deren Peripherie Befestigungselemente (2) zur Befestigung des Netzes (1) in dem Kraftfahrzeug vorgesehen sind, wobei das Netz (1) mittels eines Abnähers (3) in zwei Teile unterteilt ist, **dadurch gekennzeichnet, dass** in dem Abnäher (3) Schlaufen (4) vorgesehen sind.

2. Netz nach Anspruch 1, **dadurch gekennzeichnet, dass** der Abnäher (3) aus einem eingenähten Gurtband besteht.

3. Netz nach einem der vorhergehenden Ansprüche, **dadurch gekennzeichnet, dass** der Abnäher (3) parallel zu einer Längsseite des Netzes (1) verläuft.

4. Netz nach einem der vorhergehenden Ansprüche, **dadurch gekennzeichnet, dass** der Abnäher (3) das Netz (1) im wesentlichen in zwei gleiche Teile unterteilt.

5. Netz nach einem der vorhergehenden Ansprüche, **dadurch gekennzeichnet, dass** die Schlaufen (4) in Längsrichtung des Abnähers (3) verlaufende Längsschlitze bilden.

6. Netz nach einem der vorhergehenden Ansprüche, **dadurch gekennzeichnet, dass** die an einem der Längsränder des Netzes (1) angeordneten Befestigungselemente (2) durch die Schlaufen (4) steckbar sind.

7. Netz nach Anspruch 6, **dadurch gekennzeichnet, dass** die Anzahl der Schlaufen (4) der Anzahl der an einem der Längsränder angeordneten Befestigungselemente (2) entspricht.

8. Netz nach einem der Ansprüche 6 oder 7, **dadurch gekennzeichnet, dass** das Netz (1) mittels der durch die Schlaufen (4) gesteckten Befestigungselemente (2) an dem Fahrzeug, insbes. an der Rückenlehne (5) eines Fahrzeugsitzes, befestigbar ist.

9. Netz nach einem der Ansprüche 6 oder 8, **dadurch gekennzeichnet, dass** bei durch die Schlaufen (4) gesteckten Befestigungselementen (2) das Netz (1) in einem Bereich zwischen dem Abnäher (3) und dem die Befestigungselemente (2) tragenden Längsrand eine taschenförmige Aufnahme (6) bildet.

10. Netz nach einem der vorhergehenden Ansprüche, **dadurch gekennzeichnet, dass** die Befestigungselemente (2) als Haken, Ösen, Schlaufen o. dgl. ausgebildet sind.

## Claims

1. A net for securing luggage in position in vehicles, and having a substantially rectangular basic shape with fastening elements (2) at the periphery for fastening the net (1) in the vehicle, wherein the net (1) is divided by a take-in or tuck device (3) into two parts, **characterised in that** loops (4) are provided in the take-in device (3).

2. A net according to claim 1, **characterised in that** the take-in device (3) is a belt strap with a tuck-in.

3. A net according to any of the preceding claims, **characterised in that** the take-in device (3) is parallel with a longitudinal side of the net (1).

4. A net according to any of the preceding claims, **characterised in that** the take-in device (3) divides the net (1) into two substantially equal parts.

5. A net according to any of the preceding claims, **characterised in that** the loops (4) form slots in the longitudinal direction of the take-in device (3).

6. A net according to any of the preceding claims, **characterised in that** the fastening elements (2) on one of the longitudinal edges of the net (1) are insertable through the loops (4).

7. A net according to claim 6, **characterised in that** the number of loops (4) is equal to the number of fastening elements (2) on one of the longitudinal edges.

8. A net according to claim 6 or claim 7, **characterised in that** the net (1) is fastened to the vehicle, especially to a seat back (5), by the fastening elements (2) inserted through the loops (4).

9. A net according to claim 6 or claim 8, **characterised in that** in the case of the fastening elements (2) inserted through the loops (4), the net (1) forms a pocket-like receiver (6) in a region between the take-in device (3) and the longitudinal edge bearing the fastening elements (2).

10. A net according to any of the preceding claims, **characterised in that** the fastening elements (2) are hooks, lugs, loops or the like.

## Revendications

1. Filet pour bloquer des charges dans des véhicules automobiles ayant pratiquement une forme de base rectangulaire dont la périphérie est munie d'éléments de fixation (2) pour fixer le filet (1) dans le véhicule, le filet (1) étant subdivisé en deux parties par une partie cousue (3),
**caractérisé en ce que**
la partie cousue (3) comporte des boucles (4).

2. Filet selon la revendication 1,
**caractérisé en ce que**
la partie cousue (3) est formée d'une bande de ceinture cousue.

3. Filet selon l'une des revendications précédentes,
**caractérisé en ce que**
la partie cousue (3) est disposée parallèlement à un grand côté du filet (1).

4. Filet selon l'une des revendications précédentes,
**caractérisé en ce que**
la partie cousue (3) subdivise le filet (2) pratiquement en deux parties identiques.

5. Filet selon l'une des revendications précédentes,
**caractérisé en ce que**
les boucles (4) forment des fentes dirigées dans la direction longitudinale de la partie cousue (3).

6. Filet selon l'une des revendications précédentes,
**caractérisé en ce que**
les éléments de fixation (2) prévus sur l'un des bords longitudinaux du filet (1) peuvent être traversés par les boucles (4).

7. Filet selon la revendication 6,
**caractérisé en ce que**
le nombre de boucles (4) correspond au nombre d'éléments de fixation (2) prévus sur l'un des bords longitudinaux.

8. Filet selon l'une des revendications 6 ou 7,
**caractérisé en ce que**
le filet (1) peut être fixé au véhicule à l'aide d'éléments de fixation (2) engagés à travers les boucles (4), notamment au dossier (5) d'un siège du véhicule.

9. Filet selon l'une des revendications 6 ou 8,
**caractérisé en ce que**
pour les éléments de fixation (2) engagés dans les boucles (4), le filet (1) constitue un logement (6) en forme de poche dans la région comprise entre la partie cousue (3) et le bord longitudinal portant les éléments de fixation (2).

10. Filet selon l'une des revendications précédentes,
**caractérisé en ce que**
les éléments de fixation (2) sont réalisés sous la forme de crochets, d'oeillets, de boucles ou de moyens analogues.
